# EUROPEAN PATENT APPLICATION

(11) **EP 0 960 860 A1**
(43) Date of publication of application: **01.12.1999**
(21) Application number: 98304073.4
(22) Date of filing: 21.05.1998
(51) Int. Cl.: C02F 3/00, C02F 3/12, C02F 3/28, C02F 3/30, C02F 11/00

(54) **Biologically treating a contaminated aqueous waste stream**

(71) Applicant: SHELL INTERNATIONALE RESEARCH MAATSCHAPPIJ B.V., 2596 HR Den Haag (NL)
(72) Inventor: Davies, Huw, Chester CH2 4NU, Cheshire (GB); Godley, Andrew Richard, Chester CH2 4NU, Cheshire (GB); Linton, John Dudley, 1031 CM Amsterdam (NL)

(57) **Abstract**

Biologically treating a contaminated aqueous waste stream (1) to obtain a treated aqueous stream (3), comprising passing the contaminated aqueous waste stream (1) through a biological treatment system (6) to obtain a liquid effluent containing suspended biosludge (9) which is passed to a separator (11), separating in the separator (11) from the liquid effluent a biosludge-containing stream (15) to obtain the treated aqueous stream (3), returning at least part of the biosludge-containing stream to the biological treatment system and collecting the remainder in a collecting vessel (17), supplying at least part of the biosludge-containing stream (20) from the collecting vessel (17) into a reactor vessel (25) and adding (31) to the stream a predetermined amount of an agent that hydrolyses biosludge, passing a hydrolysed biosludge-containing stream (34) from the reactor vessel (25) to the biological treatment system (6) treating the contaminated aqueous stream (1), and removing the remainder of the biosludge-containing stream (30) from the collecting vessel (17) as excess biosludge for deposition.

## Description

The present invention relates to a process of biologically treating a contaminated aqueous waste stream to obtain a treated aqueous stream. In this treatment micro-organisms, primarily bacteria, decompose waste components. The mixture of micro-organisms is called biosludge, biomass or mixed liquor suspended solids.

A process of biologically treating a contaminated aqueous waste stream to obtain a treated aqueous stream comprises the steps of: passing the contaminated aqueous waste stream through a biological treatment system to obtain a liquid effluent containing suspended biosludge which is passed to a separator, separating in the separator from the liquid effluent a biosludge-containing stream to obtain the treated aqueous stream, returning part of the biosludge-containing stream to the inlet of the biological treatment system, and removing the treated aqueous stream.

Such a process is used for example to remove organic carbon compounds and nitrogen compounds from wastewater. The biological treatment system may suitably comprise an anaerobic or an aerobic treatment system or both.

In the above-described process, the remainder of the biosludge-containing stream, containing excess biosludge is disposed, for example as landfill.

There is a tendency to restrict deposition of the excess biosludge, and therefore, there is an interest in reducing the amount of biosludge.

It is an object of the present invention to reduce the amount of biosludge from biologically treating of wastewater streams.

To this end the process of biologically treating a contaminated aqueous waste stream to obtain a treated aqueous stream according to the present invention comprises the steps of: passing the contaminated aqueous waste stream through a biological treatment system to obtain a liquid effluent containing suspended biosludge which is passed to a separator; separating in the separator from the liquid effluent a biosludge-containing stream to obtain the treated aqueous stream; returning part of the biosludge-containing stream to the biological treatment system and collecting the remainder in a collecting vessel; subjecting part of the biosludge-containing stream from the collecting vessel to a treatment to break the cell walls to obtain an effluent stream; passing effluent stream to the biological treatment system; and removing the remainder of the biosludge-containing stream from the collecting vessel as excess biosludge for deposition.

Biosludge contains a relatively large amount of microbial cells, which comprise liquid enclosed by the cell wall. Applicant had found that when the cell walls break, the liquid is freed, and consequently only the cell walls have to be deposited. In the process of the present invention a large part of this liquid is returned from the reactor vessel to the biological treatment system, via which it ends as in the treated aqueous stream. The hydrolysed biosludge then only comprises the cell walls, and in this way the amount of biosludge that is deposited is reduced considerably.

The treatment to break the cell walls can be a physical treatment, such as ball milling or sonification, which is subjecting the cells to sound waves. An alternative treatment is hydrolysing the biosludge.

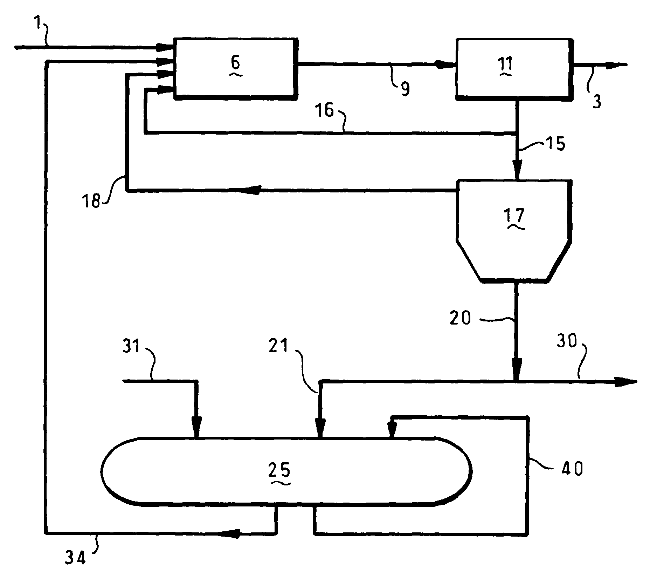

The invention will now be described by way of example in more detail with reference to the accompanying drawing showing schematically a flow scheme of the process of the present invention.

In the process of the present invention a contaminated aqueous waste stream supplied through conduit 1 is biologically treated to obtain a treated aqueous stream, which is removed through conduit 3. The biological treatment is carried out in a biological treatment system 6 through which the contaminated aqueous waste stream supplied through conduit 1 is passed. For the sake of clarity the necessary pumps and valves are not shown in the schematic flow scheme.

From the biological treatment system 6 is withdrawn through conduit 9 a liquid effluent containing suspended biosludge, and this liquid effluent is passed to a separator in the form of settler 11. In the settler 11, the biosludge settles to obtain the treated aqueous stream that is withdrawn through conduit 3 and a biosludge-containing stream.

The biosludge-containing stream is removed through conduit 15. Most of the biosludge is recycled through conduit 16 to the biological treatment system 6. The remainder is passed to a collecting vessel in the form of thickener 17. A liquid-rich stream is withdrawn from the thickener 17 and is returned through conduit 18 to the biological treatment system 6. A thickened biosludge-containing stream is withdrawn from the thickener through conduit 20. At least part of the biosludge-containing stream from the thickener 17 is passed through conduit 21 into a reactor vessel 25 and the remainder, if any, is passed away as excess biosludge through conduit 30 for further treatment and deposition (not shown).

A predetermined amount of an agent that hydrolyses biosludge is added to the biosludge-containing stream in the reactor vessel 25 is added via conduit 31. This agent causes the rupture of the walls of the cells so that the liquid contained within the cells is freed.

An effluent stream, in the form of a hydrolysed biosludge-containing stream is passed through conduit 34 from the reactor vessel 25 to the biological treatment system 6 in which system the contaminated aqueous stream is treated.

The hydrolysed biosludge-containing stream now contains water and cell walls, wherein the latter have to be disposed after the water has been removed. This is achieved in the process of the invention by passing the hydrolysed stream via the biological treatment system 6 to the settler 11.

A suitable hydrolysing agent is an alkaline material, for example caustic soda (sodium hydroxide). Such an alkaline material is used to control the pH in the biological treatment system. However, the concentration required to control the pH in the biological treatment system is too low to hydrolyse the biosludge.

Suitably the inventory of the reactor vessel 25 is recycled through conduit 40 to allow sufficient residence time for mixing the contents of the reactor vessel 25. Alternatively mixing can be done by means of conventional mixers.

Suitably the contents of the reactor vessel 25 is heated by indirect heat exchange with a heating medium such as hot water, steam or hot oil to increase the rate of the hydrolysis reaction.

The hydrolysis reaction can be carried out in a continuous mode or it can be carried out in a batch mode. Sufficient residence time is allowed for the hydrolysis reaction to complete.

The system as shown in the Figure comprises one biological treatment system 6 and one settler 11, however, the invention is not restricted to this embodiment. The system may comprise two or more biological treatment systems in parallel combined with one settler, or each biological treatment system combined with one settler.

With the process according to the present invention a reduction of between 10 to 50% in the amount of biosludge that has to be deposited can be achieved.

## Claims

1. Process of biologically treating a contaminated aqueous waste stream to obtain a treated aqueous stream, which process comprises the steps of: passing the contaminated aqueous waste stream through a biological treatment system to obtain a liquid effluent containing suspended biosludge which is passed to a separator; separating in the separator from the liquid effluent a biosludge-containing stream to obtain the treated aqueous stream; returning part of the biosludge-containing stream to the biological treatment system and collecting the remainder in a collecting vessel; subjecting part of the biosludge-containing stream from the collecting vessel to a treatment to break the cell walls to obtain an effluent stream; passing effluent stream to the biological treatment system; and removing the remainder of the biosludge-containing stream from the collecting vessel as excess biosludge for deposition.

2. Process as claimed in claim 1, wherein the treatment to break the cell walls comprises supplying biosludge-containing stream to a reactor vessel and adding to the stream a predetermined amount of an agent that hydrolyses biosludge.
